# EUROPÄISCHE PATENTSCHRIFT

(11) **EP 2 664 576 B1**
(45) Veröffentlichungstag und Bekanntmachung des Hinweises auf die Patenterteilung: **02.09.2015**
(21) Anmeldenummer: 13163317.4
(22) Anmeldetag: 11.04.2013
(51) Int. Cl.: B66C 23/80

(54) **Querkraftreduzierende Abstützeinrichtung**
Shearing force reducing support device
Dispositif d'étayage réduisant la force transversale

(30) Priorität: 14.05.2012 DE 102012208058
(43) Veröffentlichungstag der Anmeldung: 20.11.2013
(73) Patentinhaber: Manitowoc Crane Group France SAS, 69574 Dardilly Cedex (FR)
(72) Erfinder: Schürmann, Johannes, 26441 Jever (DE); Engelbrecht, Oliver, 26452 Sande (DE)
(74) Vertreter: Schwabe - Sandmair - Marx

(56) Entgegenhaltungen:
- CN-U- 201 800 687
- JP-A- H0 971 227
- JP-A- 2008 307 925
- JP-A- 2010 222 138
- US-A1- 2006 267 326

## Beschreibung

Die vorliegende Erfindung betrifft eine Abstützeinrichtung, wie sie bei mobilen Hebemaschinen, insbesondere bei Fahrzeugkranen eingesetzt wird, um diese im Betrieb abzustützen. Die vorliegende Erfindung betrifft ferner eine mobile Hebemaschine, insbesondere einen Fahrzeugkran mit zumindest einer solchen Abstützeinrichtung.

Moderne Mobilkrane werden zum Heben von zunehmend schwereren Lasten auf immer größere Höhen eingesetzt. Im gleichen Maße steigt der Anspruch, einen leistungsfähigen Mobilkran mit möglichst geringem Eigengewicht einzusetzen, um Logistikkosten zu reduzieren. Insbesondere wird angestrebt, einen Mobilkran mit möglichst hoher Traglast auf möglichst wenigen Achsen bereitzustellen, ohne die zulässigen Achslasten zu überschreiten. Dies wirkt sich zum einen günstig auf die Wendigkeit des Mobilkrans während des Transports und zum anderen senkend auf die Gesamtkosten des Krans aus. Diese Aufgabenstellung kann unverändert auch auf andere mobile Hebemaschinen übertragen werden, beispielsweise auf fahrbare Arbeitsbühnen oder Hubrettungsfahrzeuge, die im Betrieb mittels Abstützeinrichtungen abgestützt werden.

Solche Abstützeinrichtungen bestehen im Wesentlichen aus einem Stützträger, der aus dem Fahrzeug-Fahrgestell ausgefahren oder ausgeschwenkt werden kann, und einem im Bereich des vom Fahrgestell weg weisenden Endes des Stützträgers angeordneten Abstützzylinder, der wiederum einen Hydraulikzylinder und eine aus dem Hydraulikzylinder ausfahrbare Kolbenstange umfasst. Zur Abstützung der Hebemaschine wird die Kolbenstange aus dem Abstützträger ausgefahren, so dass letztendlich die mehrere Abstützeinrichtungen aufweisende Hebemaschine samt Abstützträgern angehoben wird. Bauartbedingt werden die Stützträger beim Abstützvorgang durch die Krafteinwirkung der Abstützzylinder verformt. Die daraus resultierende Durchbiegung am äußeren Ende des Abstützträgers bewirkt eine, Querkraft welche wiederum eine Verformung der Kolbenstange bewirkt. Die Querkraft muss als zusätzliche Last von der Kolbenstange aufgenommen werden, was die rechnerische Gesamtkraft erhöht, die von der Kolbenstange aufgenommen werden und bei der Auslegung der Kolbenstange berücksichtigt werden muss.

Aus der CN 201800687 U, der JP 2010222138 A, der JP H0971227 A, der US 2006/267326 A1 und der JP 2008 307925 A sind Abstützeinrichtungen für Baumaschinen bekannt, deren Abstützteller eine Relativbewegung in horizontaler Richtung zulassen.

Der vorliegenden Erfindung liegt die Aufgabe zugrunde, die beschriebenen Nachteile aus dem Stand der Technik zu überwinden. Insbesondere soll das Eigengewicht der Abstützeinrichtung und somit der gesamten Hebemaschine bzw. Fahrzeugkrans reduziert werden.

Diese Aufgabe wird vom Gegenstand der nebengeordneten Patentansprüche 1 und 8 gelöst. Die Unteransprüche definieren dabei bevorzugte Ausführungsformen der vorliegenden Erfindung.

Die erfindungsgemäße Abstützeinrichtung umfasst:
- einen mit dem Fahrgestell gekoppelten Stützträger;
- eine mit dem Stützträger gekoppelte und relativ zum Stützträger verfahrbaren Kolbenstange;
- einen mit der Kolbenstange gekoppelten Stützteller;
wobei die Abstützeinrichtung derart ausgestaltet ist, dass sie eine senkrecht zur Längsachse der Kolbenstange gerichtete Bewegung des Stütztellers relativ zum Stützträger zulässt.

Mit anderen Worten wird dem Stützteller bei der Abstützung die Möglichkeit gegeben, sich relativ zum Stützträger und senkrecht zur Längsachse der Kolbenstange zu bewegen bzw. auszurichten. Diese Bewegung findet bei einem am Boden abgestützten Kran in einer im Wesentlichen horizontalen Ebene bzw. Richtung statt, da hier die Längsachse der Kolbenstange im Wesentlichen vertikal verläuft. Die Erfindung nutzt ein Kalottenlager als Koppelung von Stützteller und Kolbenstange. Erfindungsgemäß ist das Kalottenlager in einer Projektion entlang der Längsachse der Kolbenstange von dieser Längsachse beabstandet. Mit anderen Worten ist das Kalottenlager exzentrisch zur zentralen Längsachse der Kolbenstange angeordnet.

Auf diese Weise bildet die erfindungsgemäße Abstützeinrichtung eine Art Loslager, mit welchem die durch die Krafteinwirkung der Abstützzylinder auf die Stützträger hervorgerufene Verformung der Stützträger, welche letztendlich die auf die Kolbenstangen wirkende Querkraft hervorruft, kompensiert werden. Durch den Wegfall der auf die Kolbenstange wirkenden Querkraft kann diese geringer und somit leichter dimensioniert werden, was sich positiv auf das Gesamtgewicht der Abstützeinrichtung und somit der Hebemaschine auswirkt. Ebenso wird hierdurch der verfälschende Einfluss der auftretenden Querkraft auf eine mögliche Stützdruckanzeige verhindert, so dass die Genauigkeit der Anzeige über die tatsächlich wirkende Stützkraft verbessert wird. Mit Hilfe einer Stützdruckanzeige kann ermittelt werden, ob ein Kran ordnungsgemäß abgestützt ist. Dabei wird aus dem Druck des Hydrauliköls für die hydraulisch betätigten Stützzylinder auf die Stützkraft geschlossen. Die erwähnten Querkräfte müssen hierbei ebenso berücksichtigt werden, da sie die Aussage über die tatsächliche Stützkraft verfälschen können, weil ein Teil der Stützkraft als Reibungskraft über die Führung des Stützzylinders abgeleitet wird.

Die senkrecht zur Längsachse des Stützzylinders gerichtete Bewegung des Stütztellers kann dabei rotatorische und translatorische Komponenten aufweisen. Wichtig ist nur, dass dem Stützteller relativ zum Stützträger ein gewisser Freiheitsgrad gegeben wird, um die auf den Stützzylinder wirkenden Querkräfte zu verhindern oder zumindest reduzieren.

Gemäß einer bevorzugten Ausführungsform der vorliegenden Erfindung fährt der Stützteller bei unbenutzter Abstützeinrichtung selbsttätig in eine Grundposition ein. Anders ausgedrückt befindet sich der Stützteller vor dem Abstützvorgang stets in der gleichen Grundposition, um sich während des Abstützvorgangs, nämlich sobald die elastische Verformung des Stützträgers einsetzt, aus seiner Grundposition heraus zu bewegen.

Gemäß einer weiteren bevorzugten Ausführungsform der vorliegenden Erfindung wird die Bewegung des Stütztellers relativ zum Stützträger mittels der Koppelung von Kolbenstange und Hydraulikzylinder bzw. Stützträger, und der Koppelung von Stützteller und Kolbenstange in Kombination zugelassen. Somit würden genau die Koppelungen bzw. Schnittstellen zwischen den einzelnen Komponenten der Abstützeinrichtung die Relativbewegung des Stütztellers zum Stützzylinder ermöglichen. Grundsätzlich ist es jedoch ebenso vorstellbar, Einrichtungen außerhalb der Koppelungen bzw. Schnittstellen an den Komponenten selbst, beispielsweise dem Stützteller oder dem Stützzylinder vorzusehen, welche einzeln oder zusammen eine wie oben beschriebene Bewegung des Stütztellers relativ zum Stützträger ermöglichen.

Gemäß einer bevorzugten Ausführungsform lässt die Koppelung von Stützteller und Stützzylinder eine rotatorische Bewegung des Stütztellers relativ zum Stützzylinder zu, wobei gemäß einer weiter bevorzugten Ausführungsform einzig eine solche rotatorische Bewegung zugelassen wird. Auf diese Weise kann sich der Stützteller Bodenunebenheiten anpassen, ohne auf die Kolbenstange wirkende Querkräfte hervorzurufen.

Gemäß einer weiteren bevorzugten Ausführungsform wird die Kolbenstange hydraulisch verfahren bzw. betätigt. Hierfür kann im Stützträger ein Hydraulikzylinder vorgesehen werden, in welchem die Kolbenstange als Kolben geführt wird und mittels in den Zylinderraum eingeführten bzw. aus dem Zylinderraum ausgeführten Hydraulikfluids aus- bzw. eingefahren wird. Allerdings kann die Kolbenstange auch einen separaten Kolben aufweisen, der die Führungs- und Dichtfunktion im Zylinder wahrnimmt, und der mit der Kolbenstange gekoppelt ist.

Gemäß einer weiteren bevorzugten Ausführungsform lässt die Koppelung von Kolbenstange und Hydraulikzylinder bzw. Stützträger eine Rotation der Kolbenstange um ihre zentrale Längsachse im Hydraulikzylinder zu. Diese Funktion kann sehr gut mittels einer Hydraulikzylinder-Kolbenstangen-Paarung vorgenommen werden, die einen kreisrunden Querschnitt aufweist. Somit kann sich die Kolbenstange bzw. deren Kolben im Hydraulikzylinder des Stützträgers drehen, was einen entscheidenden, weiter unten beschriebenen Vorteil ermöglicht.

Die exzentrische Anordnung des Kalottenlagers ermöglicht zusammen mit der Rotationsfreiheit der Kolbenstange um ihre zentrale Längsachse eine Bewegung des Kalottenlagers senkrecht zur Kolbenstangenlängsachse. Somit kann auch der mittels des Kalottenlagers mit der Kolbenstange gekoppelte Stützteller dieser Bewegung folgen und erhält somit einen Freiheitsgrad senkrecht zur Kolbenstangenlängsachse. Eine so ausgestaltete Abstützeinrichtung kann daher die Funktion eines Loslagers wahrnehmen, welches die Verformung des Stützträgers unter Last kompensiert und somit die damit einhergehende Querkraft auf die Kolbenstange verhindert.

Gemäß einer weiteren bevorzugten Ausführungsform ist die Kolbenstange um ihre Längsachse drehfest mit dem Kolben verbunden, insbesondere wobei der Kolben am Kolbenboden eine Ausnehmung aufweist, in welcher ein korrespondierender Vorsprung im Bereich des Bodens des dem Kolben umgebenden Hydraulikzylinders einfahren kann, wobei Ausnehmung und Vorsprung derart ausgestaltet sind, dass beim Einfahren des Vorsprungs in die Ausnehmung eine Drehung der Kolbenstange um ihre Längsachse in eine Grundstellung bewirkt wird. Sofern die Kolbenstange keinen Kolben aufweist bzw. selbst die Dicht- und Führungsfunktion im Hydraulikzylinder des Stützträgers wahrnimmt, kann sie anstelle des Kolbens selbst eine solche Ausnehmung aufweisen. Durch eine solche Ausgestaltung ist die automatische Rückstellfunktion des Stütztellers in eine Grundposition gegeben. Ebenso ist es jedoch vorstellbar, andere Elemente vorzusehen, welche die Rückstellfunktion wahrnehmen, beispielsweise ein oder mehrere Federelemente, die bei einer Bewegung des Stütztellers aus seiner Grundposition heraus gespannt werden und bei einer Entlastung diesen wieder in seine Grundposition zurückbewegen.

Ein weiterer Aspekt der vorliegenden Erfindung betrifft eine mobile Hebemaschine, insbesondere einen Fahrzeugkran mit zumindest einer, bei einer paarweisen Anordnung von beiderseits der Hebemaschine und einander gegenüberliegenden Abstützeinrichtungen pro Abstützeinrichtungspaar bevorzugt genau einer Abstützeinrichtung, wie sie oben beschrieben wurde. Bei einem Fahrzeugkran mit vier Abstützeinrichtungen, die paarweise im vorderen und im hinteren Bereich beidseits des Fahrzeugkrans angeordnet sind, kann bevorzugterweise je Abstützeinrichtungspaar eine erfindungsgemäße "Loslager"-Abstützeinrichtung vorgesehen werden, während die jeweils andere Abstützeinrichtung der zwei Paare eine konventionelle Abstützeinrichtung ist, welche die Funktion eines Festlagers aufweist.

Eine besonders bevorzugte Ausführungsform der vorliegenden Erfindung wird anhand der beiliegenden Figuren näher erläutert. Die Erfindung kann alle hierin beschriebenen Merkmale einzeln sowie in jedweder sinnvollen Kombination umfassen. Es zeigen:
- Figuren 1a bis 1c:: konventionelle Abstützeinrichtung im entlasteten Zustand, im belasteten Zustand und eine konventionelle Kalottenlagerung;
- Figur 2a:: erfindungsgemäße Abstützeinrichtung im belasteten Zustand;
- Figur 2b:: erfindungsgemäße Koppelung von Kolbenstange und Hydraulikzylinder bzw. Stützträger;
- Figur 2c:: erfindungsgemäße Koppelung von Stützteller und Kolbenstange.

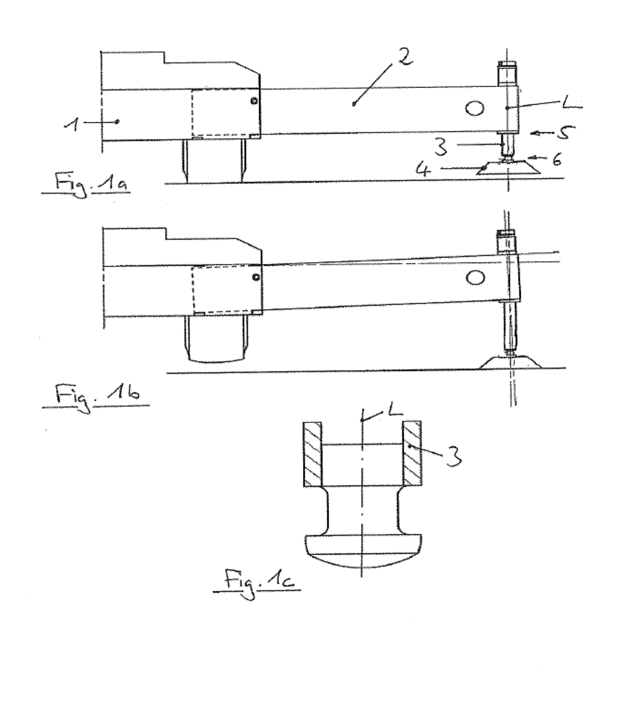

In der Figur 1a ist das Fahrgestell 1 eines Fahrzeugkrans zu sehen, aus welchem der Stützträger 2 einer Abstützeinrichtung ausgefahren wurde. Zu sehen ist ferner die Kolbenstange 3, welche in vertikaler Richtung nach unten aus dem Hydraulikzylinder 5 des Stützträgers 2 ausgefahren werden kann, und der sich am vom Fahrgestell 1 wegweisenden Ende des Stützträgers 2 befindet. Am unteren Ende der Kolbenstange 3 ist diese über ein Kalottenlager 6 mit einem Stützteller 4 verbunden, wobei das Kalottenlager 6 rotatorische Freiheitsgrade des Stütztellers 4 relativ zur Kolbenstange 3 zulässt. Die Kolbenstange 3 ist in einem Hydraulikzylinder 5 des Stützträgers 2 gelagert.

Wie in der Figur 1b zu sehen ist, wird der Stützträger 2 und schließlich auch das Fahrgestell 1 durch Ausfahren der Kolbenstange 3 angehoben, wobei die auftretenden Gewichtskräfte den Stützträger 2 verformen. Da der Stützteller 4 an seiner Position am Boden verbleibt, verformt sich die Kolbenstange 3 aufgrund der auftretenden Querkräfte. Dies hat wiederum zur Folge, dass die Kolbenstange 3 so dimensioniert sein muss, dass die auftretenden Querkräfte aufgenommen werden können, wobei ein gewisser Einfluss der Querkräfte auf die Genauigkeit der Anzeige über die tatsächliche Stützkraft nicht verhindert werden kann.

In der Figur 1 ist die Kalotte eines konventionellen Kalottenlagers zu sehen, welches im unteren Bereich der Kolbenstange 3 angeordnet ist.

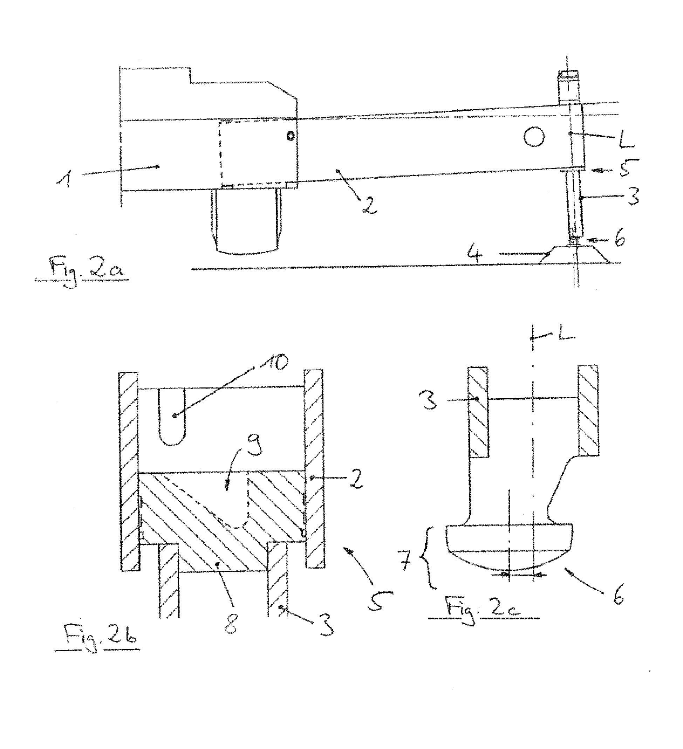

In der Figur 2a ist die erfindungsgemäße Abstützeinrichtung im belasteten Zustand zu sehen. Das an der Kolbenstange 3 befestigte Kalottenlager 6 ist relativ zur Längsachse L der Kolbenstange 3 exzentrisch angeordnet, so dass eine Querkraft, die durch den Stützteller 4 auf die Kolbenstange 3 übertragen wird, zu einer Drehbewegung der Kolbenstange 3 führt. Nachdem beim Abstützvorgang der Abstützteller 4 den Boden berührt hat, beginnt der Stützträger 2 sich in seinem Spiel zum Kran hin anzuheben. Erfindungsgemäß erfolgt durch die Einwirkung der Querkraft eine Verdrehung der Kolbenstange 3, wobei das exzentrische Kalottenlager auf dem ruhenden Stützteller 4 verbleibt und in der korrespondierenden Aufnahme des Stütztellers 4 lediglich eine Drehbewegung vollzieht, so dass die Kolbenstange 3, vom Stützteller 4 aus gesehen, auf einer Kreisbahn ausweicht. Dadurch kann die Kolbenstange 3 durch Verdrehen im Hydraulikzylinder 5 des Stützträgers 2 den seitlichen, durch die elastische Verformung des Stützträgers 2 hervorgerufenen seitlichen Versatz ausgleichen, so dass eine Verformung die Kolbenstange 3 wirksam verhindert werden kann.

In der Figur 2b ist die erfindungsgemäße Koppelung von Kolbenstange 3 und Stützträger 2 zu sehen, die beim Einfahren der Kolbenstange 3 eine automatische Rückstellbewegung der Kolbenstange 3 in eine Grundstellung bewirkt. Hierzu weist der am oberen Ende der Kolbenstange angeordnete Kolben 8 eine Ausnehmung 9 auf, in welche der Vorsprung 10 am oberen Boden des Hydraulikzylinders 5 einfahren kann, um eine Verdrehung des Kolbens 8 zusammen mit der Kolbenstange 3 im Hydraulikzylinder 5 des Stützträgers 2 bewirkt.

In der Figur 2c ist die Koppelung des Stütztellers 2 (nicht gezeigt) und der Kolbenstange 3 gezeigt, wobei nur der obere Gelenkteil 7, nämlich die Kalotte 7 des Kalottengelenks zu sehen ist. Ferner ist die Exzentrizität des Kalottengelenks relativ zur Längsachse L der Kolbenstange 3 zu erkennen, welche mit dem rotatorischen Freiheitsgrad des Kolbens 8 bzw. des Stützzylinders 3 im Hydraulikzylinder 5 des Stützträgers 2 eine Relativbewegung des Stütztellers 4 zum Stützträger 2 zulässt.

Der Abstützvorgang mit der erfindungsgemäßen Abstützeinrichtung läuft in der folgenden Reihenfolge ab: Der Mobilkran steht zunächst auf seinen Rädern, wobei die Kolbenstange 3 in die Hydraulikzylinder 5 eingefahren sind und die Stützteller 4 über die Kalottengelenke an den Kolbenstangen 3 hängen. Die Kalottengelenke befinden sich zunächst noch in ihrer Grundstellung. Die Kolbenstangen 3 werden ausgefahren, bis die Stützteller 4 den Boden berühren, wobei sich die Stützträger 2 heben, sobald die Kolbenstangen 3 weiter ausgefahren werden. Dabei entsteht ein seitlicher Versatz zwischen Stützteller 4 und Kolbenstange 3. Die dadurch entstehende Querkraft führt zum Verdrehen der Kolbenstange 3 im Hydraulikzylinder 5, wobei sich dieser Effekt verstärkt, bis sich die Räder des Krans vom Boden lösen.

Der Abrüstvorgang läuft entsprechend in umgekehrter Reihenfolge ab: Der Mobilkran steht auf seinen Stützträgern 2, wobei die Räder den Boden nicht berühren. Die Kalottengelenke an den Kolbenstangen 3 befinden sich in der verdrehten Stellung, was Querkräfte auf die Kolbenstange 3 verhindert. Beim Einfahren der Kolbenstangen 3 werden, sobald die Räder den Boden berühren, die Stützträger 2 aufgrund der nachlassenden elastischen Verformung der Stützträger 2 an dem äußeren Ende abgesenkt, wobei ein seitlicher Versatz zwischen Stützteller 4 und Kolbenstange 3 entsteht. Die dadurch entstehende Querkraft führt zum Zurückdrehen der Kolbenstange 3. Beim weiteren Einfahren der Kolbenstange 3 bis zum Anschlag werden diese zusammen mit den Kalottengelenken 7 und den Stütztellern 4 durch die Ausnehmung 9 im Kolbenboden und den Vorsprung 10 im Zylinderboden in die Grundstellung zurückgedreht.

## Patentansprüche

1. Abstützeinrichtung für eine mobile Hebemaschine, insbesondere für einen Fahrzeugkran, mit
- einem mit dem Fahrgestell (1) gekoppelten Stützträger (2);
- einer mit dem Stützträger (2) gekoppelten und relativ zum Stützträger (2) verfahrbaren Kolbenstange (3);
- einem mit der Kolbenstange (3) gekoppelten Stützteller (4); wobei Stütztellers (4) relativ zum Stützträger (2) und senkrecht zur Längsachse (L) der Kolbenstange (3) beweglich an die Kolbenstange (3) gekoppelt ist,
**dadurch gekennzeichnet, dass**
die Koppelung (6) von Stützteller (4) und Kolbenstange (3), ein Kalottenlager (7) umfasst, das in einer Projektion entlang der Längsachse (L) der Kolbenstange (3) von deren zentraler Längsachse (L) beabstandet ist.

2. Abstützeinrichtung gemäß Anspruch 1, wobei der Stützteller (4) bei unbenutzter Abstützeinrichtung selbsttätig in eine Grundposition einfährt.

3. Abstützeinrichtung gemäß Anspruch 1 oder 2, wobei die Koppelung (5) von Kolbenstange (3) und Stützträger (2) und die Koppelung (6) von Stützteller (4) und Kolbenstange (3) die Bewegung der Stütztellers (4) zulassen.

4. Abstützeinrichtung gemäß einem der Ansprüche 1 bis 3, wobei die Koppelung (6) von Stützteller (4) und Kolbenstange (3) rotatorische Bewegungen, insbesondere ausschließlich rotatorische Bewegungen des Stütztellers (4) relativ zur Kolbenstange (3) zulässt.

5. Abstützeinrichtung gemäß einem der Ansprüche 1 bis 4, wobei die Kolbenstange (3) hydraulisch verfahren wird, insbesondere mittels eines mit der Kolbenstange (3) gekoppelten Kolbens (8).

6. Abstützeinrichtung gemäß einem der Ansprüche 1 bis 5, wobei die Koppelung (5) von Kolbenstange (3) und Stützträger (2) eine Rotation der Kolbenstange (3) um ihre zentrale Längsachse (L) zulässt.

7. Abstützeinrichtung gemäß einem der Ansprüche 1 bis 6, wobei die Kolbenstange (3) um ihre Längsachse (L) drehfest mit dem Kolben (8) verbunden ist, insbesondere wobei der Kolben (8) am Kolbenboden eine Ausnehmung (9) aufweist, in welche ein korrespondierender Vorsprung (10) im Bereich des Bodens des den Kolben (8) umgebenden Zylinders einfahren kann, und Ausnehmung (9) und Vorsprung (10) derart ausgestaltet sind, dass beim Einfahren des Vorsprungs (10) in die Ausnehmung (9) eine Drehung der Kolbenstange (3) um ihre Längsachse (L) in eine Grundstellung bewirkt wird.

8. Mobile Hebemaschine, insbesondere Fahrzeugkran, mit zumindest einer, bei einer paarweisen Anordnung von beidseits der Hebemaschine und einander gegenüberliegenden Abstützeinrichtungen pro Abstützseinrichtungspaar bevorzugt genau einer Abstützeinrichtung gemäß einem der Ansprüche 1 bis 7.

## Claims

1. A support device for a mobile lifting machine, in particular a vehicle crane, comprising:
- a carrier support (2) which is coupled to the vehicle chassis (1);
- a piston rod (3) which is coupled to the carrier support (2) and can be moved relative to the carrier support (2);
- a support disc (4) which is coupled to the piston rod (3);
wherein the support disc (4) is coupled to the piston rod (3) such that it can be moved relative to the carrier support (2) and perpendicular to the longitudinal axis (L) of the piston rod (3),
**characterised in that**
the coupling (6) between the support disc (4) and the piston rod (3) comprises a spherical bearing (7) which is spaced from the central longitudinal axis (L) of the piston rod (3) in a projection along the latter's longitudinal axis (L).

2. The support device in accordance with Claim 1, wherein the support disc (4) automatically moves into a base position when the support device is not being used.

3. The support device in accordance with Claim 1 or 2, wherein the coupling (5) between the piston rod (3) and the carrier support (2) and the coupling (6) between the support disc (4) and the piston rod (3) allow the movement of the support disc (4).

4. The support device in accordance with any one of Claims 1 to 3, wherein the coupling (6) between the support disc (4) and the piston rod (3) allows rotational movements of the support disc (4), in particular only rotational movements of the support disc (4), relative to the piston rod (3).

5. The support device in accordance with any one of Claims 1 to 4, wherein the piston rod (3) is moved hydraulically, in particular by means of a piston (8) which is coupled to the piston rod (3).

6. The support device in accordance with any one of Claims 1 to 5, wherein the coupling (5) between the piston rod (3) and the carrier support (2) allows the piston rod (3) to rotate about its central longitudinal axis (L).

7. The support device in accordance with any one of Claims 1 to 6, wherein the piston rod (3) is connected to the piston (8), rotationally fixed about its longitudinal axis (L), wherein the base of the piston (8) in particular comprises a cavity (9) into which a corresponding protrusion (10) in the region of the base of the cylinder surrounding the piston (8) can move, and the cavity (9) and the protrusion (10) are configured such that when the protrusion (10) moves into the cavity (9), the piston rod (3) is caused to rotate about its longitudinal axis (L), into a base position.

8. A mobile lifting machine, in particular a vehicle crane, comprising at least one and preferably precisely one support device in accordance with any one of Claims 1 to 7 for each pair of support devices, where support devices are arranged in pairs on both sides of the lifting machine and opposite each other.

## Revendications

1. Dispositif de support pour une machine de levage mobile, en particulier pour une grue mobile, avec
- une poutre de support (2) couplée à un châssis (1) ;
- une tige de piston (3) couplée à la poutre de support (2) et déplaçable par rapport à la poutre de support (2) ;
- un plateau de support (4) couplé à la tige de piston (3) ; où le plateau de support (4) est couplé à la tige de piston (3) de façon mobile par rapport à la poutre de support (2) et perpendiculairement à l'axe longitudinal (L) de la tige de piston (3),
**caractérisé en ce que** le couplage (6) du plateau de support (4) et de la tige de piston (3) comprend un palier concave (7) qui, dans une projection le long de l'axe longitudinal (L) de la tige de piston (3), se trouve à distance de son axe longitudinal central (L).

2. Dispositif de support selon la revendication 1, où, lorsque le dispositif de support n'est pas utilisé, le plateau de support (4) se rétracte automatiquement dans une position de base.

3. Dispositif de support selon la revendication 1 ou 2, où le couplage (5) de la tige de piston (3) et de la poutre de support (2) et le couplage (6) du plateau de support (4) et de la tige de piston (3) permettent le mouvement du plateau de support (4).

4. Dispositif de support selon l'une des revendications 1 à 3, où le couplage (6) du plateau de support (4) et la tige de piston (3) permet des mouvements rotatifs, en particulier exclusivement des mouvements rotatifs du plateau de support (4) par rapport à la tige de piston (3).

5. Dispositif de support selon l'une des revendications 1 à 4, où la tige de piston (3) est déplacée hydrauliquement, en particulier au moyen d'un piston (8) couplé à la tige de piston (3).

6. Dispositif de support selon l'une des revendications 1 à 5, où le couplage (5) de la tige de piston (3) et de la poutre de support (2) permet une rotation de la tige de piston (3) autour de son axe longitudinal central (L).

7. Dispositif de support selon l'une des revendications 1 à 6, où la tige de piston (3) est fixée au piston (8) de manière solidaire en rotation autour de son axe longitudinal (L), en particulier où le piston (8) comporte un évidement (9) au niveau de la tête de piston, dans lequel peut pénétrer une saillie (10) correspondante dans la région du fond du cylindre entourant le piston (8), et où l'évidement (9) et la saillie (10) sont configurés de telle manière que l'entrée de la saillie (10) dans l'évidement (9) provoque une rotation de la tige de piston (3) autour de son axe longitudinal (L) jusque dans une position de base.

8. Machine de levage mobile, en particulier grue mobile avec, dans un arrangement par paires de dispositifs de support se faisant face de part et d'autre de la machine de levage, au moins un, de préférence exactement un dispositif de support selon l'une des revendications 1 à 7 par paire de dispositifs de support.
